# EUROPEAN PATENT SPECIFICATION

(11) **EP 2 555 342 B1**
(45) Date of publication and mention of the grant of the patent: **04.07.2018**
(21) Application number: 10847630.0
(22) Date of filing: 25.08.2010
(51) Int. Cl.: H01R 24/00, H01R 27/02, H01R 13/629, H01R 13/631, H01R 13/46

(54) **MOVABLE CHARGING CONNECTOR**
BEWEGLICHER LADESTECKER
CONNECTEUR DE CHARGEMENT MOBILE

(30) Priority: 04.06.2010 CN 201010193457
(43) Date of publication of application: 06.02.2013
(73) Proprietor: Hangzhou Electric Power Bureau, Hangzhou, Zhejiang 310009 (CN); Hangzhou Da You Science Technology Development Co., Ltd., Zhejiang 310012 (CN)
(72) Inventor: LI, Bo, Hangzhou Zhejiang 310012 (CN); ZHENG, Zhengxian, Zhejiang 310026 (CN); QI, Jiajin, Zhejiang 310026 (CN); XU, Yu, Zhejiang 310026 (CN); ZHANG, Pengfei, Zhejiang, 310026 (CN); ZHU, Chengzhi, Zhejiang, 310026 (CN); He, Chunlin, Zhejiang, 310026 (CN); ZHANG, Fan, Zheijiang 310012 (CN); NIE, Liang, Zhejiang, 310012 (CN); DENG, Guangbin, Zhejiang, 310012 (CN)
(74) Representative: Lavoix
(86) International application number: PCT/CN2010/076330
(87) International publication number: WO 2011/150598

(56) References cited:
- EP-A1- 2 169 776
- CN-A- 101 847 806
- CN-Y- 2 178 949
- CN-Y- 201 018 151
- CN-Y- 201 061 005
- DE-U1-202004 000 387
- GB-A- 2 124 839
- US-B1- 7 294 010

## Description

This application claims the priority of Chinese Patent Application No.201010193457.0, entitled "MOVABLE CHARGING CONNECTOR" filed on June 4, 2010 with State Intellectual Property Office of PRC, which is incorporated herein by reference in its entirety.

### FIELD OF THE INVENTION

The invention relates to the field of electronic circuits, and particularly to a movable charging connector.

### BACKGROUND OF THE INVENTION

In the traditional power grid, traditional electric energy, which is transmitted by traditional cables, can only be used after being transmitted to corresponding substations by various kinds of cables. An electric vehicle refers to the vehicle which is powered by an on-board electrical supply, runs by driving wheels with an electric motor, and conforms to various demands of the road traffic safety statute. The electric vehicle itself doesn't emit harmful gases which pollute the atmosphere. Even in the case of converting the assumed quantity of electricity into the production of a power plant, besides sulfur and particulate, the amount of other polluting matters is also considerably reduced. Thus, most of power plants are founded far away from the densely populated city for the purpose of decreasing damage to human; and the power plant is stationary, so it is easier to discharge and clean various harmful emissions centrally.

However, for the electric vehicle, the battery which is able to power the electric vehicle becomes the critical technique. At present, the energy stored by per weight of a storage battery is too little, and the battery for the electric vehicle is relatively expensive and not yet forms an economic scale, so the buying price of the electric vehicle is relatively high. The operating cost of an electric vehicle, in some trial results, is higher than that of a motor vehicle, and in other trial results, is only a third of that of a motor vehicle, which mainly depends on the service life of a battery and the local price of oil and electric power.

Therefore, for the electric vehicle, the greatest obstacle to the development of the industrialization is the infrastructure construction and the price. Compared with hybrid vehicles, it is more necessary for the electric vehicle to be supported by infrastructure constructions including a set of equipment for charging. As stated previously, the most urgent technique problem to be solved is how to charge the battery of the electric vehicle better. EP 2 169 776 A1 discloses a connector comprising an electric connector contact unit (14) which can be connected in a plugging direction (58) to an electric counterpart contact unit (54) of a correspondingly designed connector counterpart (52) for establishing an electrical connection. Furthermore, the connector has at least one plug-in receptacle (18) for receiving a plug-in engagement means (56) of a correspondingly designed connector counterpart.

DE 20 2004 00 387 U1 discloses a charging connector, wherein a socket device is connected to an axially movable mounting plate via a ball bearing.

### SUMMARY OF THE INVENTION

The technical problem to be solved by the invention is to provide a movable charging connector for charging a battery of an electric vehicle better.

In order to solve the technique problem described above, an embodiment of the invention provides a movable charging connector, which includes:
a movable socket device and a plug device, wherein the movable socket device is provided on a base plate and includes a socket module and at least one guiding cylinder, the socket module and the at least one guiding cylinder are fixedly provided on a movable mounting plate, and a tension spring is provided between the movable mounting plate and the base plate; four corners of the movable mounting plate are riveted to four corners of the base plate via four said tension springs, respectively; and
wherein when the plug device and the movable socket device are connected with each other, the movable mounting plate and the tension spring are cooperated with each other, such that the moveable socket device can be moved in any direction.

Preferably, the movable socket device further includes a cover plate, and the movable mounting plate and the tension spring are located between the base plate and the cover plate and are invisible.

Preferably, a guiding post fitted with the guiding cylinder is provided in the plug device.

Preferably, the number of the guiding cylinder of the movable socket device is two, and the guiding cylinders are matched with the guiding posts of the plug device.

Preferably, when the plug device and the movable socket device are connected with each other, the guiding cylinders are configured to be fitted with the guiding posts of the plug device so as to position the charging connector.

Preferably, the socket module includes a first socket and a second socket. The first socket may be connected to a charger so as to charge with a high current, and the second socket may be connected to a management system so as to achieve charging management and charging permission of a battery.

Preferably, first contact pins are provided in the first socket, and second contact pins are provided in the second socket. The first contact pins are arranged and spaced uniformly in the first socket, and the distances between the first contact pins and the periphery of the first socket are equal to each other.

Preferably, the plug device includes a first plug and a second plug. First jacks of the first plug are matched with the first contact pins of the first socket, and second jacks of the second plug are matched with the second contact pins of the second socket.

Preferably, the movable socket device is provided with a terminal board on the other side thereof opposite to the socket module, and the terminal board is configured to be connected with a standard battery frame.

Preferably, a multi-strand flexible insulated wire with a diameter of 2.053mm and a cross section area of 3.3mm² (specification of AWG 12) is adopted as a connecting wire of the first contact pins.

Preferably, a multi-strand flexible insulated wire with a diameter of 1.291mm and a cross section area of 1.3mm² (specification of AWG 16) is adopted as a connecting wire of the second contact pins.

Compared with the prior art, the advantages of the invention are that:
in the embodiment, the charging connector includes the movable socket device and the plug device, wherein the movable socket device is provided on the base plate and includes the socket module and at least one guiding cylinder, and the socket module and at least one guiding cylinder are fixedly provided on the movable mounting plate, and the tension spring is provided between the movable mounting plate and the base plate. Thus, when the plug device and the movable socket device are connected with each other, the movable mounting plate and the tension spring are cooperated with each other, such that the moveable socket device may be moved in any direction. Even if the plug device and the movable socket device are not aligned with each other completely, the movable socket device is also able to be moved in a certain range by elastic force of the tension spring, so that a better connection for the charging connector can be performed. Therefore, green environmental protection energy may be provided for the operation of the electric vehicle.

### BRIEF DESCRIPTION OF THE DRAWINGS

In order to describe embodiments of the invention and the technical solution of the prior art more clearly, accompanying drawings which are referred to in the description of the embodiments or the prior art will be illustrated briefly. Obviously, the accompanying drawings referred to in the following description are only some embodiments of the invention, and other drawings can be obtained by those skilled in the art according to these drawings without creative work.
Fig. 1 is a section view of a movable socket device in an embodiment of the invention;
Fig. 2 is a top view of the movable socket device in the embodiment of the invention;
Fig. 3 is a section view of a plug device in an embodiment of the invention; and
Fig. 4 is a top view of the plug device in the embodiment of the invention.

### DETAILED DESCRIPTION OF THE INVENTION

Hereinafter, the invention will be further described in detail in conjunction with the drawings and specific embodiments to make the above mentioned objects, features, and advantages of the invention more apparent.

A charging connector disclosed in an embodiment of the invention may specifically include a movable socket device and a plug device. The movable socket device is provided on a base plate and may specifically include a socket module and at least one guiding cylinder. The socket module and at least one guiding cylinder are fixedly provided on a movable mounting plate. A tension spring is provided between the movable mounting plate and the base plate. The socket module includes joints of first contact pins and second contact pins. The guiding cylinder is provided to be fitted with the guiding post of the plug device. When the guiding post of the plug device and the guiding cylinder of the movable socket device are fitted with each other completely, the complete connection between the plug device and the movable socket device may be ensured. When the plug device and the movable socket device are connected with each other, the movable mounting plate and the tension spring are cooperated with each other, such that the movable socket device may be moved in any direction.

It is to be noted that any other embodiment of the movable plug and socket, which is obtained by those skilled in the art according to the movable charging connector disclosed in the embodiments of the invention without creative work, will fall within the scope of the invention.

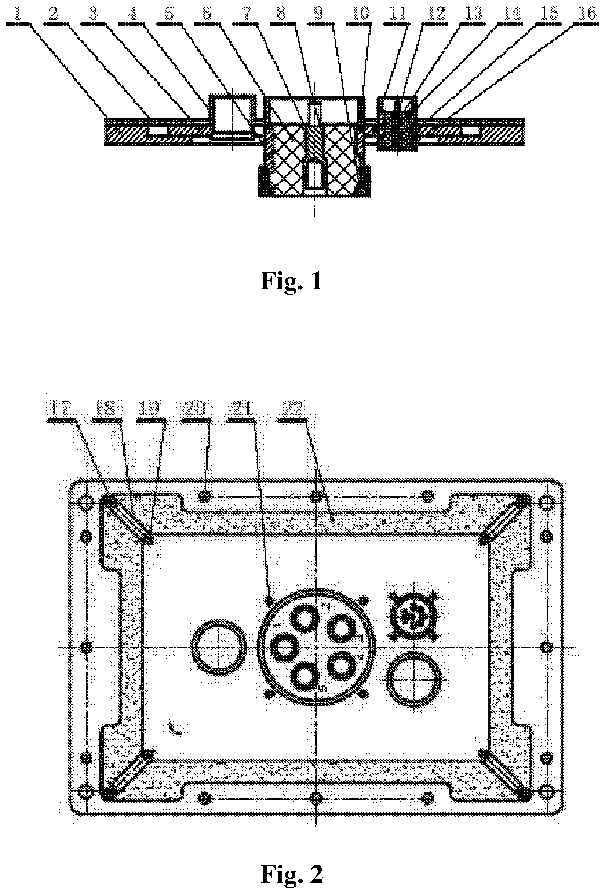

In a specific embodiment disclosed in the invention, referring to Figs. 1 and 2, Fig. 1 is a section view of a movable socket device in the embodiment of the invention, and Fig. 2 is a top view of the movable socket device in the embodiment of the invention. A socket module may include a first socket and a second socket. Specifically, the first socket may be a five-hole socket and the second socket may be an eight-hole socket. In Fig. 1, the five-hole socket may specifically include a shell 5, an insulator 6, first contact pins 7, locating detents 8, an end cover 9 and a rubber gasket 10. The eight-hole socket may specifically include a shell 11, second contact pins 12, locating detents 13, a rubber gasket 14 and an insulator 15. There are five first contact pins 7 and eight second contact pins in total. Preferably, the five first contact pins of the five-hole socket are arranged and spaced uniformly in the five-hole socket, and the distances between the five first contact pins and the periphery of the five-hole socket are equal to each other. A multi-strand flexible insulated wire with a diameter of 2.053mm and a cross section area of 3.3mm² (specification of AWG 12) is adopted as a connecting wire of the first contact pins. A multi-strand flexible insulated wire with a diameter of 1.291mm and a cross section area of 1.3mm² (specification of AWG 16) is adopted as a connecting wire of the second contact pins. Certainly, other insulated wires with different=- specifications may be adopted as the connecting wires of the first contact pins and the second contact pins in the embodiment of the present invention, which will not be defined by the invention. The first socket described in the embodiment of the invention may also be other types of sockets capable of being used to implement the invention, such as a three-hole socket, and the second socket described in the embodiment of the invention may also be other types of sockets capable of being used to implement the invention, such as a five-hole socket.

In Fig. 1, the movable socket device may further include a cover plate 2. Referring to Fig. 2, the movable socket device further includes a tension spring 18. The tension spring 18 is fixed on a base plate 1 by a pin 17 and is riveted on a mounting plate 3 by a rivet 19. Specifically, four corners of the movable mounting plate are riveted to four corners of the base plate via four tension springs, respectively. As shown in Figs. 1 and 2, the mounting plate 3 and the tension springs 18 are located between the base plate 1 and the cover plate 2 and are invisible. Preferably, the vertical distance between the mounting plate 3 and the base plate 1 is set to be, for example 30 millimeter (mm). It is easily conceivable for those skilled in the art that the tension spring component may be replaced by other retractable components, such as a spring or a reed.

The movable socket device shown in Figs. 1 and 2 may further provided with a terminal board on the other side thereof opposite to the socket module. The terminal board may be connected with a standard battery frame to supply electric power to the battery of the electric vehicle in charging. The movable socket device may further include at least one guiding cylinder 4. Generally, two guiding cylinders 4 are provided to make a better connection between the plug device and the movable socket device. The movable socket device may further include a retainer ring 16, and sunk screws 20 and 21 for fixing the base plate 1. Also as shown in Fig. 2, the space where the tension springs 18 are located is filled with high-grade lubricating grease 22, thus further ensuring movement of the movable socket device smoothly and conveniently.

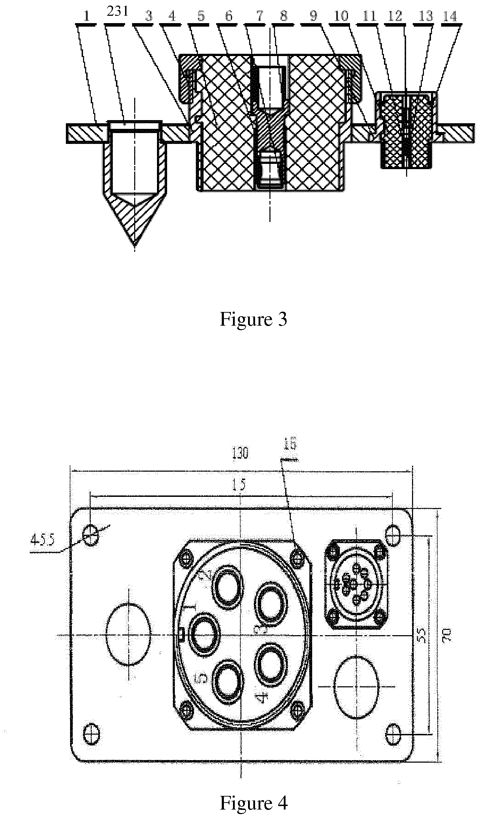

Referring to Fig. 3, a section view of a plug device in the embodiment of the invention is shown. Fig. 4 is a top view of the plug device in the embodiment of the invention. Specifically, the plug device may include a first plug and a second plug. Specifically, the first plug may be a five-hole plug and the second plug may be an eight-hole plug. In Fig. 3, the five-hole plug may include a shell 3, an end cover 4, an insulator 5, locating detents 6, contacting rings 7 and jack sleeves 8. The eight-hole plug may include a shell 9, an insulator 10, locating detents 11, jack sleeves 12 and contact rings 13. The plug device is further provided with a guiding post 231. Generally, two guiding post 231 are provided. The plug device may further include a mounting plate 1. Also referring to Fig. 4, the five-hole plug and the eight-hole plug are fixed on the mounting plate by sunk screws 15. Certainly, it is conceivable for those skilled in the art that the two plugs may be fixed on the mounting plate in other ways. The first plug described in the embodiment of the invention may also be other types of plugs capable of being used to implement the invention, such as a three-hole plug, and the second plug described in the embodiment of the invention may also be other types of plugs capable of being used to implement the invention, such as a five-hole plug.

It is to be noted that, five first jacks of the five-hole plug match with the first contact pins of the five-hole socket, and eight second jacks of the eight-hole plug match with the second contact pins of the eight-hole socket. The disengagement force between the first contact pin and the first jack may be checked by a corresponding standard contact pin, and when the roughness is Ra 0.8, the disengagement force should be ranged from 3 N to 6 N. The disengagement force between the second contact pin and the second jack may also be checked by a corresponding standard contact pin, and when the roughness is Ra 0.8, the disengagement force should be ranged from 0.3 N to 1.5 N. The interior of all of the first jacks and the second jacks may be coated with DJB-823 protective agent uniformly.

Furthermore, it is necessary that the five jacks of the five-hole plug are matched with the first contact pins of the five-hole socket and the eight jacks of the eight-hole plug are matched with the second contact pins of the eight-hole socket.

It is to be noted that two guiding cylinders are generally provided for the movable socket device, and the guiding cylinders are matched with the guiding posts of the plug device. When the plug device is connected with the movable socket device, the guiding cylinders are fitted with the guiding posts of the plug device to position the charging connector, thereby achieving the movable connecting function.

As for the moveable socket device shown in Fig. 2, in a practical application, among the five first contact pins in the figure, it is necessary that one is grounded; other two are used as cathodes of the five-hole socket and are connected to output cathodes of the five-hole plug; and the rest two are used as anodes of the five-hole socket and are connected to output anodes of the five-hole plug. It is to be noted that the five contact pins may be arranged in any orders and the fact that which contact pin is grounded or used as the anode and the cathode will not affect the implementation of the invention.

Therefore, the definitions of the pins corresponding to the five first contact pins of the five-hole socket can be made in any ways. In a practical application, among these five pins, it is necessary that one is grounded; other two are used as the cathodes of the five-hole socket and are connected to the output cathodes of the five-hole plug; and the rest two are used as the anodes of the five-hole socket and are connected to the output anodes of the five-hole plug.

To facilitate the understanding of the invention by those skilled in the art, a specific example of the definition of the pins is shown in table 1, in which the parameters of each pin of the five-hole socket are shown in table 1 as follows.

**Table 1**

| **Pin No.** | **Pin connecting wire definition** | **Dia. of the connecting wire** | **remark** |
|---|---|---|---|
| 1 | A fast charging socket, connected to the protective ground of a plug ( 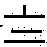 ) | Two-colored, 25mm² | Flexible wire |
| 2 | A cathode of the fast charging socket (-), connected to an output cathode of the plug (OUT-) | Blue, 25mm² | Flexible wire |
| 3 | A cathode of the fast charging socket (-), connected to an output cathode of the plug (OUT-) | Blue, 25mm² | |
| 4 | An anode of the fast charging socket (+), connected to an output anode of the plug (OUT+) | Brown, 25mm² | Flexible wire |
| 5 | An anode of the fast charging socket (+), connected to an output anode of the plug (OUT+) | Brown, 25mm² | |

The pins 1 to 5 in table 1 correspond to the five first contact pins which are indicated by numerals 1 to 5 in Fig. 2, respectively. The pin 1 is used as a ground pin of the fast charging socket (five-hole socket) and is connected to the protective ground of the plug ( 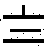 ). The pins 2 and 3 are used as the cathodes of the fast charging socket, and are connected to the output cathode of the plug (OUT-) when the battery is needed to be charged. The pins 4 and 5 are used as the anodes of the fast charging socket, and are connected to the output anodes of the plug (OUT+) when the battery is needed to be charged. Specifically, the pin 1 is connected with a two-colored flexible wire of 25mm² in diameter; each of the pins 2 and 3 is connected with a blue flexible wire of 25mm² in diameter, and each of the pins 4 and 5 is connected with a brown flexible wire of 25mm² in diameter. Of course, it can be understood for those skilled in the art that table 1 is only a specific example, and other similar pin definitions can also be adopted to implement the invention.

Similarly, to facilitate the understanding of the invention by those skilled in the art, the specific example of the definition of the pins of the eight-hole socket is described herein. However, it is conceivable for those skilled in the art that the definitions of the pins can be exchanged mutually, which will not affect the implementation of the invention.

In a practical application, a specific example may be referred to and is shown in table 2.

**Table 4**

| **Pin No.** | **Pin connecting wire definition** | **Dia. of the connecting wire** | **remark** |
|---|---|---|---|
| 1 | A fast charging socket -L-, connected to L-of a plug | Black, 0.4mm² | Background of the charging station |
| 2 | A fast charging socket -L+, connected to L+ of the plug | Red, 0.4mm² | |
| 3 | A fast charging socket -CAN-L, connected to CAN-L of | shielded | |
| | the plug | twisted-pair wire | |
| 4 | A fast charging socket -CAN- shielding layer, connected to CAN- shielding layer of the plug | shielded twisted-pair layer | |
| 5 | A fast charging socket -CAN-H, connected to CAN-H of the plug | shielded twisted-pair wire | |
| 6 | A fast charging socket -CAN1-L, with the other end being floating | shielded twisted-pair wire | Confirmation of permitting battery to be charged in background |
| 7 | A fast charging socket -CANl-sheilding layer, with the other end being floating | shielded twisted-pair layer | |
| 8 | A fast charging socket -CAN1-H, with the other end being floating | shielded twisted-pair wire | |

In table 4, the pin 1 is used as the cathode of the power supply of the fast charging socket, and may be connected to the cathode of the power supply of the corresponding plug; the pin 2 is used as the anode of the power supply of the fast charging socket, and may be connected to the anode of the power supply of the corresponding plug; the pin 3 is used as the CAN-L (low level in the CAN bus) of the fast charging socket, and is connected to the CAN-L of the corresponding plug; the pin 4 is used as the CAN-shielding layer of the fast charging socket, and is connected to the CAN-shielding layer of the plug; and the pin 5 is used as the CAN-H (high level in the CAN bus) of the fast charging socket, and is connected to the CAN-H of the plug. The pin 6 is used as the CAN1-L of the fast charging socket, with the other end being floating and not being connected with any terminal of the plug. The pin 7 is used as the CAN1-shielding layer of the fast charging socket, with the other end being floating and not being connected with any terminal of the plug. The pin 8 is used as the CAN1-H of the fast charging socket, with the other end being floating and not being connected with any terminal of the plug.

It is to be noted that, although the specific definitions of the pins are illustrated in table 4, other definitions can be obtained by those skilled in the art without creative work, for example, by exchanging the definitions of the pins 1 and 2, which will not affect the implementation of the invention.

By the charging connector described in the embodiment, the standard battery of the electric vehicle can be charged in a fast self-adaptive and effective way, thereby ensuring the normal operation of the electric vehicle.

In a practical application, the definition of each of the five first jacks of the plug device shown in Fig. 4 corresponds to the definition of the five-hole socket. In the five-hole plug shown in Fig. 4, it is necessary that one jack is grounded; two contact pins are used as the cathodes of the five-hole socket and are connected to the output cathodes of the five-hole plug; and the two rest contact pins are used as the anodes of the five-hole socket and are connected to the output anodes of the five-hole plug. It is to be noted that the five contact pins may be arranged in any orders and the fact that which jack is grounded or used as the cathode or the anode will not affect the implementation of the invention.

Therefore, the definitions of the pins corresponding to the five first jacks of the five-hole plug may be made in any way. In a practical application, among these five pins, it is necessary that one is grounded; other two are used as the cathodes of the five-hole plug and are correspondingly connected to the cathodes of the five-hole socket; and the rest two are used as the anodes of the five-hole plug and are correspondingly connected to the anodes of the five-hole socket.

To facilitate the understanding of the invention by those skilled in the art, a specific example of the definition of the pins is shown in table 3, in which the parameters of each pin of the five-hole plug are shown in table 3 as follows.

**Table 3**

| **Pin No.** | **Pin connecting wire definition** | **Dia. of the connecting wire** | **remark** |
|---|---|---|---|
| 1 | Protective ground | Two-colored, 25mm² | Flexible wire |
| 2 | Battery terminal - | Blue, 25mm² | Flexible wire |
| 3 | Battery terminal - | Blue, 25mm² | Flexible wire |
| 4 | Battery terminal + | Brown, 25mm² | Flexible wire |
| 5 | Battery terminal + | Brown, 25mm² | Flexible wire |

In table 3, the pin 1 is grounded; the pins 2 and 3 are connected to the cathodes of the battery terminal respectively; and the pins 4 and 5 are connected to the anodes of the battery terminal respectively. The batteries described in the embodiments of the invention are the standard battery modules used in the electric vehicle. The connecting wires have a diameter of 25mm² and generally adopt flexible wires, in which the connecting wire connected to the pin 1 is two-colored, the connecting wires connected to the pins 2 and 3 are blue, and the connecting wires connected to the pins 4 and 5 are brown.

It is to be noted that, although the specific definitions of the pins are illustrated in table 3, other definitions of the pins may also be obtained by those skilled in the art according to table 3, which will not affect the implementation of the invention.

Similarly, as shown in table 4, a specific example in a practical application of the parameters of the pins of the eight-hole plug is also illustrated correspondingly. It is noted that, although the specific definition of each pin is illustrated in table 4, other definitions of the pins may be obtained by those skilled in the art according to table 4, which will not affect the implementation of the invention.

**Table 4**

| **Pin No.** | **Pin connecting wire definition** | **Dia. of connecting wire** | **remark** |
|---|---|---|---|
| 1 | L- | Black, 0.4mm² | Battery managing module |
| 2 | L+ | Red, 0.4mm² | |
| 3 | CAN-L | shielded twisted-pair wire | |
| 4 | CAN-shielding layer | shielded twisted-pair layer | |
| 5 | CAN-H | shielded twisted-pair wire | |
| 6 | CAN1-L | shielded twisted-pair wire | Confirmation of permitting battery to be charged |
| 7 | CAN 1-shielding layer | shielded twisted-pair layer | |
| 8 | CAN1-H | shielded twisted-pair wire | |

In table 4, the pin 1 is connected to the cathode of the power supply, and the pin 2 is connected to the anode of the power supply, which are respectively distinguished with black and red flexible wires of 0.4mm² in diameter. The pin 3 is connected to CAN-L, the pin 4 is connected to CAN-shielding layer, and the pin 5 is connected to CAN-H, in which a shielded twisted-pair wire is used as the connecting wire. The pin 6 is connected to CAN-L, the pin 7 is connected to CAN1-sheilding layer, and the pin 8 is connected to CAN1-H. The pins 1, 2 and 3 are connected to the battery managing module of the background system. The pins 6, 7 and 8 are used to achieve the function of the confirmation of permitting the battery to be charged, and are mainly used to match the received input battery signal with the battery parameters (such as model) pre-stored in the background when the battery is charged. Specifically, if matched, the current charging of the battery is permitted, and if not matched, the battery is not permitted to continue the charge.

It should be noted that the embodiments in the specification are described in a progressive way, each of which emphasizes on the differences from the other ones, and among which the identical or similar parts can be referred to each other. In addition, the term "comprise", "include" or any other variation thereof is intended to contain something non-exclusively, such that a process, a method, a commodity, or an equipment which includes a series of elements, includes not only these elements, but also other elements not specified definitely or the inherent elements thereof. In the case of no more limitations, the element of a process, a method, a commodity, or an equipment defined by sentences like "include one......" does not exclude other identical ones that exist in the process, the method, the commodity, or the equipment.

## Claims

1. A movable charging connector, comprising a movable socket device and a plug device, wherein the movable socket device is provided on a base plate (1) and comprises a socket module and at least one guiding cylinder (4), the socket module and the at least one guiding cylinder (4) are fixedly provided on a movable mounting plate (3), and a tension spring (18) is provided between the movable mounting plate (3) and the base plate (1); four corners of the movable mounting plate (3) are riveted to four corners of the base plate (1) via four said tension springs (18), respectively; and
wherein when the plug device and the movable socket device are connected with each other, the movable mounting plate (3) and the tension spring (18) are cooperated with each other, such that the movable socket device is able to be moved in any direction.

2. The movable charging connector according to claim 1, **characterized in that** the movable socket device further comprises a cover plate (2), and the movable mounting plate (3) and the tension spring (18) are located between the base plate (1) and the cover plate (2) and are invisible.

3. The movable charging connector according to claim 1, **characterized in that** a guiding post (2) fitted with the guiding cylinder (4) is provided in the plug device.

4. The movable charging connector according to claim 3, **characterized in that** the number of the guiding cylinder (4) of the movable socket device is two, and the guiding cylinders (4) are matched with the guiding posts (231) of the plug device.

5. The movable charging connector according to claim 4, **characterized in that** when the plug device and the movable socket device are connected with each other, the guiding cylinders (4) are configured to be fitted with the guiding posts (231) of the plug device so as to position the charging connector.

6. The movable charging connector according to claim 1, **characterized in that** the socket module comprises a first socket and a second socket, the first socket is connected to a charger so as to charge with a high current, and the second socket is connected to a management system so as to achieve charging management and charging permission of a battery.

7. The movable charging connector according to claim 6, **characterized in that** big contact pins (7) are provided in the first socket, and small contact pins (12) are provided in the second socket; the big contact pins (7) are arranged and spaced uniformly in the first socket, and the distances between the big contact pins (7) and the periphery of the first socket are equal to each other.

8. The movable charging connector according to claim 7, **characterized in that** the plug device comprises a first plug and a second plug, first jacks of the first plug are matched with the big contact pins (7) of the first socket, second jacks of the second plug are matched with the small contact pins (12) of the second socket.

9. The movable charging connector according to claim 7, **characterized in that** the movable socket device is provided with a terminal board on the other side thereof opposite to the socket module, and the terminal board is configured to be connected with a standard battery frame.

10. The movable charging connector according to claim 7, **characterized in that** a multi-strand flexible insulated wire with a diameter of 2.053mm and a cross section area of 3.3mm² (AWG 12) is adopted as a connecting wire of the big contact pins (7).

11. The movable charging connector according to claim 7, **characterized in that** a multi-strand flexible insulated wire with a diameter of 1.291mm and a cross section area of 1.3mm² (AWG 16) is adopted as a connecting wire of the small contact pins (12).

## Patentansprüche

1. Beweglicher Ladeverbinder, umfassend eine bewegliche Buchsenvorrichtung und eine Steckervorrichtung, wobei die bewegliche Buchsenvorrichtung auf einer Grundplatte (1) bereitgestellt ist und ein Buchsenmodul und mindestens einen Führungszylinder (4) umfasst, wobei das Buchsenmodul und der mindestens eine Führungszylinder (4) ortsfest auf einer beweglichen Montageplatte (3) bereitgestellt sind und eine Spannfeder (18) zwischen der beweglichen Montageplatte (3) und der Grundlatte (1) bereitgestellt ist, wobei vier Ecken der beweglichen Montageplatte (3) über vier derartige Spannfedern (18) an vier Ecken der Grundplatte (1) genietet sind, und
wobei, wenn die Steckervorrichtung und die bewegliche Buchsenvorrichtung miteinander verbunden sind, die bewegliche Montageplatte (3) und die Spannfeder (18) miteinander zusammenwirken, so dass die bewegliche Buchsenvorrichtung in jede Richtung bewegt werden kann.

2. Beweglicher Ladeverbinder nach Anspruch 1, **dadurch gekennzeichnet, dass** die bewegliche Buchsenvorrichtung ferner eine Deckplatte (2) umfasst und die bewegliche Montageplatte (3) und die Spannfeder (18) sich zwischen der Grundplatte (1) und der Deckplatte (2) befinden und nicht sichtbar sind.

3. Beweglicher Ladeverbinder nach Anspruch 1, **dadurch gekennzeichnet, dass** eine Führungssäule (2), die mit dem Führungszylinder (4) versehen ist, in der Steckervorrichtung bereitgestellt ist.

4. Beweglicher Ladeverbinder nach Anspruch 3, **dadurch gekennzeichnet, dass** die Anzahl der Führungszylinder (4) der beweglichen Buchsenvorrichtung zwei beträgt und die Führungszylinder (4) mit den Führungssäulen (231) der Steckervorrichtung gepaart sind.

5. Beweglicher Ladeverbinder nach Anspruch 4, **dadurch gekennzeichnet, dass** die Führungszylinder (4) dafür gestaltet sind, mit den Führungssäulen (231) der Steckervorrichtung montiert zu sein, wenn die Steckervorrichtung und die bewegliche Buchsenvorrichtung miteinander verbunden sind, um den Ladeverbinder zu positionieren.

6. Beweglicher Ladeverbinder nach Anspruch 1, **dadurch gekennzeichnet, dass** das Buchsenmodul eine erste Buchse und eine zweite Buchse umfasst, die erste Buchse mit einem Ladegerät verbunden ist, um mit einem hohen Strom zu laden, und die zweite Buchse mit einem Verwaltungssystem verbunden ist, um eine Ladeverwaltung und eine Ladeerlaubnis für eine Batterie zu erhalten.

7. Beweglicher Ladeverbinder nach Anspruch 6, **dadurch gekennzeichnet, dass** große Kontaktstifte (7) in der ersten Buchse bereitgestellt sind und kleine Kontaktstifte (12) in der zweiten Buchse bereitgestellt sind, die großen Kontaktstifte (7) in der ersten Buchse gleichmäßig angeordnet und beabstandet sind und die Abstände zwischen den großen Kontaktstiften (7) und dem Umfang der ersten Buchse zueinander gleich sind.

8. Beweglicher Ladeverbinder nach Anspruch 7, **dadurch gekennzeichnet, dass** die Steckervorrichtung einen ersten Stecker und einen zweiten Stecker umfasst, erste Buchsenteile des ersten Steckers mit den großen Kontaktstiften (7) der ersten Buchse gepaart sind, zweite Buchsenteile des zweiten Steckers mit den kleinen Kontaktstiften (12) des zweiten Steckers gepaart sind.

9. Beweglicher Ladeverbinder nach Anspruch 7, **dadurch gekennzeichnet, dass** die bewegliche Buchsenvorrichtung mit einer Anschlussplatte auf ihrer anderen Seite gegenüber dem Buchsenmodul versehen ist und die Anschlussplatte dafür gestaltet ist, mit einem standardmäßigen Batterierahmen verbunden zu werden.

10. Beweglicher Ladeverbinder nach Anspruch 7, **dadurch gekennzeichnet, dass** ein mehradriger flexibler isolierter Draht mit einem Durchmesser von 2,053 mm und einer Querschnittsfläche von 3,3 mm² (AWG 12) als Verbindungsdraht der großen Kontaktstifte (7) angewendet wird.

11. Beweglicher Ladeverbinder nach Anspruch 7, **dadurch gekennzeichnet, dass** ein mehradriger flexibler isolierter Draht mit einem Durchmesser von 1,291 mm und einer Querschnittsfläche von 1,3 mm² (AWG 16) als Verbindungsdraht der kleinen Kontaktstifte (12) angewendet wird.

## Revendications

1. Connecteur de charge mobile, comprenant un dispositif de fiches mobile et un dispositif de prises, dans lequel le dispositif de fiches mobile est prévu sur une plaque de base (1) et comprend un module de fiches et au moins un cylindre de guidage (4), le module de fiches et ledit au moins un cylindre de guidage (4) sont prévus fixement sur une plaque de montage mobile (3), et un ressort de tension (18) est prévu entre la plaque de montage mobile (3) et la plaque de base (1) ; les quatre coins de la plaque de montage mobile (3) sont rivetés aux quatre coins de la plaque de base (1) par l'intermédiaire de quatre dits ressorts de tension (18), respectivement ; et
dans lequel, lorsque le dispositif de prises et le dispositif de fiches mobile sont connectés l'un à l'autre, la plaque de montage mobile (3) et le ressort de tension (18) coopèrent l'un avec l'autre, de sorte que le dispositif de fiches mobile peut être déplacé dans n'importe quelle direction.

2. Connecteur de charge mobile selon la revendication 1, **caractérisé en ce que** le dispositif de fiches mobile comprend en outre une plaque de recouvrement (2), et la plaque de montage mobile (3) et le ressort de tension (18) sont situés entre la plaque de base (1) et la plaque de recouvrement (2) et ne sont pas visibles.

3. Connecteur de charge mobile selon la revendication 1, **caractérisé en ce qu'**un montant de guidage (2) assemblé avec le cylindre de guidage (4) est prévu dans le dispositif de prises.

4. Connecteur de charge mobile selon la revendication 3, **caractérisé en ce que** le nombre de cylindres de guidage (4) du dispositif de fiches mobile est de deux, et les cylindres de guidage (4) sont appariés avec les montants de guidage (231) du dispositif de prises.

5. Connecteur de charge mobile selon la revendication 4, **caractérisé en ce que**, lorsque le dispositif de prises et le dispositif de fiches mobile sont connectés l'un à l'autre, les cylindres de guidage (4) sont configurés pour être assemblés avec les montants de guidage (231) du dispositif de prises de manière à positionner le connecteur de charge.

6. Connecteur de charge mobile selon la revendication 1, **caractérisé en ce que** le module de fiches comprend une première fiche et une deuxième fiche, la première fiche est connectée à un chargeur de manière à charger avec un courant élevé, et la deuxième fiche est connectée à un système de gestion de manière à effectuer la gestion de la charge et à autoriser la charge d'une batterie.

7. Connecteur de charge mobile selon la revendication 6, **caractérisé en ce que** de grosses broches de contact (7) sont prévues dans la première fiche, et des petites broches de contact (12) sont prévues dans la deuxième fiche ; les grosses broches de contact (7) sont agencées et espacées uniformément dans la première fiche, et les distances entre les grosses broches de contact (7) et la périphérie de la première fiche sont égales les unes aux autres.

8. Connecteur de charge mobile selon la revendication 7, **caractérisé en ce que** le dispositif de prises comprend une première prise et une deuxième prise, des premières douilles de la première prise sont appariées avec les grosses broches de contact (7) de la première fiche, des deuxièmes douilles de la deuxième prise sont appariées avec les petites broches de contact (12) de la deuxième fiche.

9. Connecteur de charge mobile selon la revendication 7, **caractérisé en ce que** le dispositif de fiches mobile est pourvu d'une plaque à bornes sur l'autre côté de celui-ci opposé au module de fiches, et la plaque à bornes est configurée pour être connectée à un cadre de batterie standard.

10. Connecteur de charge mobile selon la revendication 7, **caractérisé en ce qu'**un fil isolé souple multibrin avec un diamètre de 2,053 mm et une aire en coupe de 3,3 mm² (AWG 12) est adopté en tant que fil de connexion des grosses broches de contact (7).

11. Connecteur de charge mobile selon la revendication 7, **caractérisé en ce qu'**un fil isolé souple multibrin avec un diamètre de 1,291 mm et une aire en coupe de 1,3 mm² (AWG 16) est adopté en tant que fil de connexion des petites broches de contact (12).
